# EUROPEAN PATENT APPLICATION

(11) **EP 2 451 147 A1**
(43) Date of publication of application: **09.05.2012**
(21) Application number: 10844959.6
(22) Date of filing: 19.08.2010
(51) Int. Cl.: H04N 5/225, G02B 7/02, G03B 15/00, G03B 17/02, G03B 17/08

(54) **CAMERA MODULE**

(30) Priority: 10.03.2010 JP 2010052786; 11.03.2010 JP 2010054790; 11.03.2010 JP 2010054081
(71) Applicant: SMK Corporation, Tokyo 142-8511 (JP)
(72) Inventor: MANO, Nobuyuki, Tokyo 142-8511 (JP); TUCHIYA, Masaki, Tokyo 142-8511 (JP); KASHIMA, Masayoshi, Tokyo 142-8511 (JP)
(74) Representative: Schulz, Dirk
(86) International application number: PCT/JP2010/064020
(87) International publication number: WO 2011/111248

(57) **Abstract**

Manufacture of molded cases of various types is not required even if the molded cases house different numbers of substrates, so that cost of manufacturing camera modules with various functions is reduced. A camera module includes an optical system holder composed of a substrate supporting part in the form of a square box with a down-facing opening, and a cylindrical lens unit fixing part provided integrally with the substrate supporting part and formed at the center of the top of the substrate supporting part. A lens unit is supported in the lens unit fixing part, and an image capturing element holding substrate on which an image capturing element is placed is fixed in the substrate supporting part. A substrate holder is coupled to an end portion of the substrate supporting part of the optical system holder, and a circuit component holding substrate is supported in the substrate holder.

## Description

### TECHNICAL FIELD

The present invention relates to a camera module mainly used as a vehicle-mounted camera module.

### BACKGROUND ART

A compact camera module for capturing an image of the back of an automobile has widely been used. Such a camera module uses a molded case that is composed of upper and lower cases. The upper case has a lens barrel in which a lens unit is fixed. The upper case houses a substrate fixed in a predetermined position, and an image capturing element such as a CCD and a CMOS element is mounted on the substrate.

If the camera module only has an image capturing function, the structure of the camera module is simplified that includes an image capturing element and a connector for connection with a cable mounted on a single substrate fixed in the camera module (as disclosed, for example, in Patent Document 1).

A multifunctional vehicle-mounted camera module has been developed in recent years that includes not only an image capturing element but also a DSP (digital signal processor), a memory circuit, a preset circuit, and the like. The conventional multifunctional vehicle-mounted camera module may have the following structures intended to satisfy the need for size reduction. In one structure, a plurality of compact substrates stacked in the direction of the optical axis of a lens unit is incorporated in a molded case, and these substrates are fixed in the case with spacers interposed between the substrates. In another structure, the molded case itself, or a shield fitting fixed in the molded case is provided with parts for fixation of the respective substrates, and the substrates are fixed to the corresponding parts (as disclosed, for example, in Patent Document 2).

The vehicle-mounted camera module of the aforementioned type includes various components of an electronic circuit and various optical components incorporated in a watertight outer case. A cable for power supply to the internal electronic circuit and for signal transmission is pulled out of the outer case. A potting material has conventionally been used to maintain the watertightness of part of the vehicle-mounted camera module through which the cable is pulled out (as disclosed, for example, in Patent Document 3).

Specifically, a space to be filled with a potting material is formed inside the outer case. The potting material is filled into the space while the cable penetrating the outer case is pulled from the space out of the outer case, thereby sealing the part through which the cable is pulled out.

### PRIOR ART DOCUMENTS

### PATENT DOCUMENTS

Patent Document 1: Japanese Patent Application Publication No. 2009-194543
Patent Document 2: Japanese Patent Application Publication No. 2007-22364
Patent Document 3: Japanese Patent Application Publication No. 2009-265393

### SUMMARY OF THE INVENTION

### PROBLEMS TO BE SOLVED BY THE INVENTION

As described above, the conventional camera module having only a function such as an image capturing function and the multifunctional camera module with a DSP have different numbers of substrates incorporated in their molded cases. Accordingly, a plurality of molded cases of different heights should be prepared according to the numbers of substrates to be used. For this purpose, upper and lower cases to form a molded case have been prepared separately, and the lower case has been formed individually to have a size conforming to the required area of a substrate that is determined depending on a desired function.

In particular, if a shield fitting or a molded case is provided with a part for fixation of a corresponding substrate, a plurality of types of shield fittings or molded cases of different shapes should be prepared to respond to different functions of camera modules, resulting in increase in manufacturing cost.

In a multifunctional camera module housing a plurality of stacked substrates, the substrates are connected through a substrate-to-substrate electric connector. Accordingly, the available area of substrate surfaces is made smaller by the area occupied by the connector, and this will be an obstacle to size reduction.

If the structure is configured such that a cable is pulled out through the bottom of the space to be filled with a potting material, a potting material is poured into the space while a cable passes through a cable through hole defined at the bottom surface of the space. Accordingly, only a potting material of a viscosity that avoids leakage of the potting material through a gap between the cable and the cable through hole can be used. This results in longer time for filling with the potting material, while making it difficult to fill the space with the potting material sufficiently into details.

The positions of the outer case and the cable with respect to each other should be fixed while the potting material is filled. Accordingly, the potting material can be filled only after the cable inserted into the cable through hole is temporarily fixed. This results in poor workability, while damaging appearance if the cable is released from the temporary fixation too early, so that part of the cable coated with the potting material is pulled out. If the cable is an FPC cable, for example, the bending strength of the cable is low at the root of the cable at which the cable starts to be pulled, resulting in a risk of a disconnection.

The present invention has been made in view of the aforementioned conventional problems. It is an object of the present invention to provide a vehicle-mounted camera module. Specifically, in manufacturing of camera modules of a plurality of types having different functions and housing different numbers of substrates, a vehicle-mounted camera module provided by the invention is intended to reduce cost of manufacturing camera modules, and minimize an area required for electrical connection between a plurality of substrates used in a multifunctional camera module to achieve size reduction of the camera module. The camera module provided by the invention is also intended to enhance workability by using a potting material of a low viscosity, avoid damage of appearance to be caused by leakage of the potting material or by pulling of part of the cable coated with the potting material, and reduce a risk of a disconnection in the cable pulled out.

### MEANS FOR SOLVING THE PROBLEMS

In order to solve the conventional problems mentioned above and to achieve an expected purpose, according to an aspect of the invention recited in claim 1, a vehicle-mounted camera module includes an optical system holder composed of a substrate supporting part in the form of a square box with a down-facing opening, and a cylindrical lens unit fixing part provided integrally with the substrate supporting part and formed at a center of a top of the substrate supporting part. A lens unit is supported in the lens unit fixing part, and an image capturing element holding substrate on which an image capturing element is mounted is fixed in the substrate supporting part. A substrate holder is coupled to an end portion of the substrate supporting part of the optical system holder, and a circuit component holding substrate is supported in the substrate holder.

An aspect of the invention recited in claim 2 in addition to the structure recited in claim 1 resides in that the substrate holder includes a plurality of substrate holders, and each of the substrate holders has a coupling structure for coupling to an adjacent one of the substrate holders.

An aspect of the invention recited in claim 3 in addition to the structure recited in claim 1 or 2 resides in that the substrate holder has an outer circumference the shape of which is the same as an outer circumference of the substrate supporting part of the optical system holder, and the substrate supporting part of the optical system holder is elongated by coupling the substrate holder to the optical system holder.

An aspect of the invention recited in claim 4 in addition to any one of the structures recited in claims 1 to 3 resides in that the holders each are provided with a substrate fixing shoulder formed integrally on an inner circumference of the holder, and the substrates are brought into abutting contact with the corresponding shoulders to place the substrates at their proper positions.

An aspect of the invention recited in claim 5 in addition to any one of the structures recited in claims 1 to 4 resides in that the image capturing element holding substrate and the circuit component holding substrate are composed of rigid parts that constitute a rigid flex substrate including at least two rigid parts and a flexible part connecting the rigid parts, and the rigid flex substrate is fixed in the holder while the flexible part thereof is bent into a U shape and the rigid parts are arranged in parallel with each other.

An aspect of the invention recited in claim 6 in addition to any one of the structures recited in claims 1 to 5 resides in that the substrate holder is coupled to the optical system holder with the lens unit attached to the substrate supporting part, and the optical system holder and the substrate holder in this state are housed in an outer case while watertightness is maintained.

An aspect of the invention recited in claim 7 in addition to the structure recited in claim 6 resides in that: the outer case is provided with a cable through hole formed at a bottom of the outer case through which a cable is pulled out of the outer case; the outer case is provided with a recessed portion to be filled with a potting material and which has a bottom surface in which an opening of the cable through hole is defined; an elastic bushing made of a rubbery elastic material and through which the cable is inserted while being liquid-tightly connected to the elastic bushing is fitted into the cable through hole; and a potting material is filled into the recessed portion to be filled with a potting material while the cable through hole is hermetically closed by the elastic bushing and the cable.

An aspect of the invention recited in claim 8 in addition to the structure recited in claim 7 resides in that the elastic bushing has an outer circumference in the form of a tapered tube, an annular slot to tightly receive an inner peripheral edge of the cable through hole is formed in an outer circumference of a tip end portion of the elastic bushing, and a tapered tip end portion of the elastic bushing projects outside through the bottom surface of the outer case.

### EFFECT OF THE INVENTION

In the present invention, the vehicle-mounted camera module includes the optical system holder composed of the substrate supporting part in the form of a square box with a down-facing opening, and the cylindrical lens unit fixing part provided integrally with the substrate supporting part and formed at the center of the top of the substrate supporting part. The lens unit is supported in the lens unit fixing part, and the image capturing element holding substrate on which the image capturing element is mounted is fixed in the substrate supporting part. The substrate holder is coupled to an end portion of the substrate supporting part of the optical system holder, and the circuit component holding substrate is supported in the substrate holder. Accordingly, a circuit substrate can be easily added in order for the camera module to have more functions only by coupling the substrate holder to the optical system holder. This means that this camera module and a camera module that uses only a single image capturing element holding substrate can utilize parts common to each other, resulting in reduction in manufacturing cost.

Further, in the present invention, the substrate holder includes a plurality of substrate holders, and each of the substrate holders has the coupling structure for coupling to the adjacent one of the substrate holders. Accordingly, a circuit substrate can be easily added in order for the camera module to have more functions.

Further, the substrate holder has the outer circumference the shape of which is the same as the outer circumference of the substrate supporting part of the optical system holder. The substrate supporting part of the optical system holder is elongated if the substrate holder is coupled to the optical system holder. Accordingly, camera modules housing different numbers of substrates are allowed to have the same outer case as a common part, resulting in reduction in cost of manufacturing various types of camera modules.

Further, the holders are provided with the respective substrate fixing shoulders formed integrally on the inner circumferences of the holders, and the substrates are brought into abutting contact with the corresponding shoulders to place the substrates at their proper positions. This facilitates the assembly to form the camera module.

Further, the image capturing element holding substrate and the circuit component holding substrate are composed of the rigid parts that constitute the rigid flex substrate including at least two rigid parts, and a flexible part connecting the rigid parts. The rigid flex substrate is fixed in the holder while the flexible part is bent into a U shape and the rigid parts are arranged in parallel with each other. Accordingly, unlike the conventional example, this makes it unnecessary to ensure an area to be occupied by a substrate-to-substrate electric connector. This also reduces a space between the substrates in some cases, thereby making a considerable contribution to the size reduction of the camera module.

Further, the substrate holder is coupled to the optical system holder with the lens unit attached to the substrate supporting part, and the optical system holder and the substrate holder in this state are housed in the outer case while watertightness is maintained. This allows the camera module to be used safely even in bad conditions in which the camera module may be weather damaged, so that the camera module can be placed at any place.

Further, the outer case is provided with the cable through hole formed at the bottom of the outer case through which the cable is pulled out of the outer case. The outer case is provided with the recessed portion to be filled with a potting material and which has the bottom surface in which the opening of the cable through hole is defined. The elastic bushing made of a rubbery elastic material and through which the cable is inserted while being liquid-tightly connected to the elastic bushing is fitted into the cable through hole. The potting material is filled into the recessed portion to be filled with a potting material while the cable through hole is hermetically closed by the elastic bushing and the cable. Accordingly, the cable through hole at the bottom of the recessed portion is liquid-tightly closed substantially completely while the potting material is poured into the recessed portion to be filled with a potting material. In this case, even if a high-fluidity potting material having a low viscosity is used, such a potting material does not leak to the outside through the cable through hole, thereby generating no damage on appearance. The use of the high-fluidity potting material makes it possible to fill the space with the potting material into details, so that watertightness can be maintained at a high level.

The cable is temporarily fixed by the elastic bushing when the potting material is filled. This prevents the cable and the bushing from moving with respect to each other even if some external force is applied before the filled potting material is solidified completely. Accordingly, a next process can be conducted before the potting material is completely solidified, resulting in enhanced workability.

Further, in the present invention, the elastic bushing has an outer circumference in the form of a tapered tube, the annular slot to tightly receive the inner peripheral edge of the cable through hole is formed in the outer circumference of the tip end portion of the elastic bushing, and the tapered tip end portion of the elastic bushing projects outside through the bottom surface of the outer case. Hence, the root of the cable at which the cable starts to be pulled is protected by the bushing, so that bending will not place local load on the root, thereby eliminating the risk of disconnection.

### BRIEF DESCRIPTION OF THE DRAWINGS

Fig. 1 shows a longitudinal cross sectional view of an example of a vehicle-mounted camera module according to the present invention.
Fig. 2 shows a perspective view of holders appearing after an outer case of the camera module shown in Fig. 1 is removed.
Fig. 3 shows a perspective view of an optical system holder as viewed from obliquely above used in the camera module shown in Fig. 1.
Fig. 4 shows a perspective view of the optical system holder as viewed from obliquely below.
Fig. 5 shows a perspective view of a substrate holder as viewed from obliquely above used in the camera module shown in Fig. 1.
Fig. 6 shows a perspective view of the substrate holder as viewed from obliquely below.
Fig. 7 shows a perspective view of an image capturing element holding substrate and a circuit component holding substrate used in the camera module shown in Fig. 1.
Fig. 8 shows a longitudinal cross sectional view of another example of the camera module according to the present invention.
Fig. 9 shows a perspective view of a rigid flex substrate shown in Fig. 9.
Fig. 10 shows a longitudinal cross sectional view of the rigid flex substrate.
Fig. 11 shows a longitudinal cross sectional view of a camera module as a modification of the camera module shown in Fig. 1, and which is a single-function camera module including only an image capturing element holding substrate.
Fig. 12 shows a longitudinal cross sectional view of another example of the camera module of the invention.

### BEST MODE FOR CARRYING OUT THE INVENTION

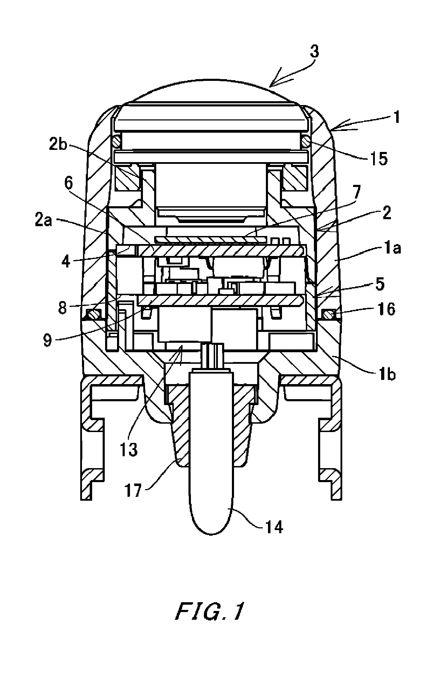

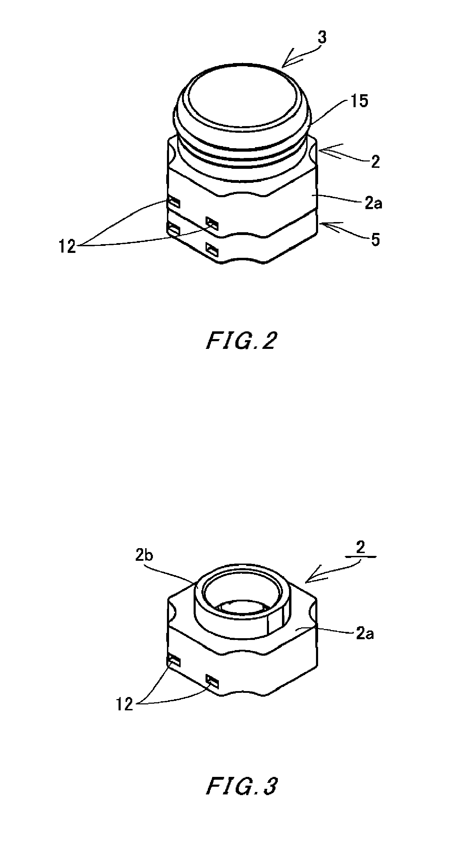

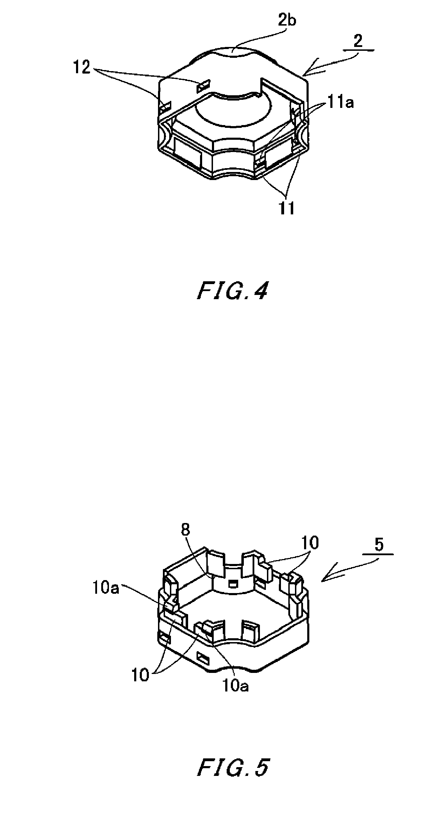

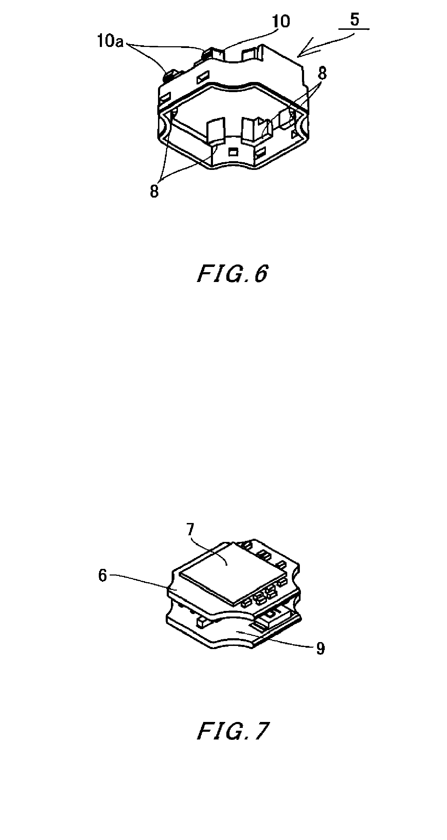

An embodiment of the present invention will be described with reference to examples shown in Figs. 1 to 7.

In the drawings, reference numeral 1a indicates an outer case body, and reference numeral 1b indicates an outer case bottom cover that closes an opening at the bottom of the outer case body 1a. The outer case body 1a and the outer case bottom cover 1b are both formed by molding a synthetic resin, and together form an outer case 1.

The outer case 1 houses a molded optical system holder 2 and a molded substrate holder 5 that are combined together.

The optical system holder 2 includes a substrate supporting part 2a in the form of a square box with a down-facing opening, and a cylindrical lens unit fixing part 2b provided integrally with the substrate supporting part 2a and formed at the center of the top of the substrate supporting part 2a. One end of the lens unit 3 threadedly engages with the inside of the lens unit fixing part 2b.

Although not shown specifically in the drawings, the lens unit 3 includes a group of lenses housed inside a lens holder tube, and an end portion of the lens holder tube threadedly engages with the inside of the lens unit fixing part 2b.

The substrate supporting part 2b is provided with a substrate fixing shoulder 4 formed on its inner circumference. An image capturing element holding substrate 6 is in abutting contact with the substrate fixing shoulder 4, and is fixed by an adhesive so that the image capturing element holding substrate 6 will not fall off. An image capturing element 7 is mounted on a surface of the image capturing element holding substrate 6 that is closer to the lens unit 3.

The substrate holder 5 has an outer circumference in the form of a barrel that is also the shape of the outer circumference of the substrate supporting part of the optical system holder. The substrate supporting part 2a of the optical system holder 2 is elongated by coupling the substrate holder 5 to the optical system holder 2.

The substrate holder 5 is provided with substrate fixing shoulders 8 formed at intermediate positions along the axis of the inner circumference of the substrate holder 5. A circuit component holding substrate 9 is in abutting contact with the substrate fixing shoulders 8, and is fixed by an adhesive.

The substrate holder 5 is provided with engaging strips 10 that project from the end section of the substrate holder 5 facing the optical system holder 2. The engaging strips 10 are inserted into insertion slots 11 formed on the inner circumference of the optical system holder 2.

The engaging strips 10 are provided with check claws 10a formed at their tip portions, and the insertion slots 11 are provided with engaging shoulders 11a to be engaged with the check claws 10a. Inserting the engaging strips 10 into the engaging slots 11 makes engagement of the check claws 10a with the engaging shoulders 11a, so that the substrate holder 5 and the optical system holder 2 are coupled to each other in a manner such that separation between the substrate holder 5 and the optical system holder 2 is prohibited.

Window holes 12 are formed at the back of the engaging shoulders 11a such that the window holes 12 connect the inside and outside of the optical system holder 2. The check claws 10a may be displaced in a direction that disengages the check claws 10 from the engaging shoulders 11a by inserting a jig through the window holes 12. This means that the optical system holder 2 and the substrate holder 5 can be separated even after they are coupled to each other.

As described above, in the present example, the optical system holder 2 and the substrate holder 5 can be separated even after they are coupled to each other. If separation of the optical system holder 2 and the substrate holder 5 is not required after they are coupled, the optical system holder 2 and the substrate holder 5 may be adhesively connected, or may be coupled by using means such as welding.

Both the substrates 6 and 9 hold thereon circuit components such as a DSP, a memory, a preset circuit, and the like to achieve a desired function in addition to the aforementioned image capturing element 7 mounted on the surface of the substrate 6. Both the substrates 6 and 9 also hold thereon a connector member and a cable connector 13 connecting circuits and connected to a cable 14 pulled out to the outside.

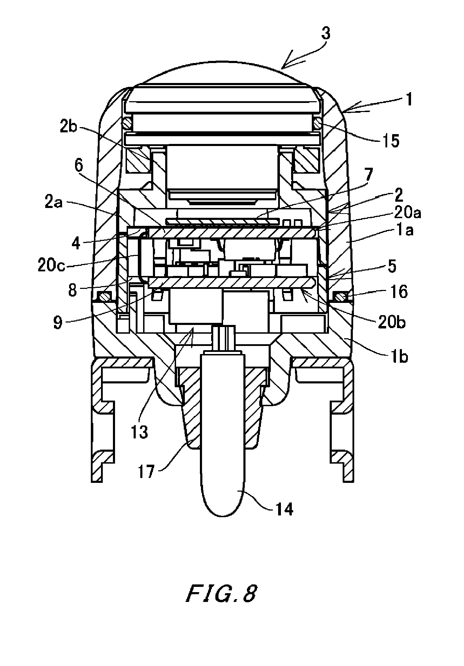

The connector member for connecting the circuits on both the substrates 6 and 9 may be omitted. In this case, both the substrates 6 and 9 may be replaced by a rigid flex substrate 20 as shown in Figs. 8 to 10.

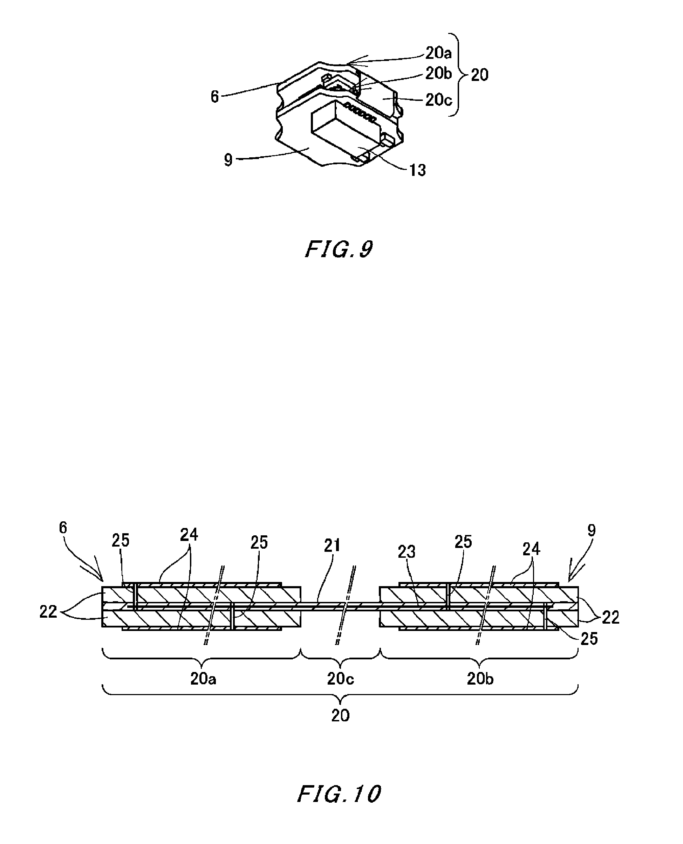

As shown in Fig. 10, the rigid flex substrate 20 includes two rigid parts 20a and 20b, and a flexible part 20c connecting the rigid parts 20a and 20b. The rigid flex substrate 20 is configured such that rigid substrates 22 made of an inflexible insulating base material are integrally stuck on upper and lower sides of opposite ends of an FPC (flexible printed substrate) 21, and a pattern 23 of the FPC 21 and a pattern 24 of each of the rigid substrates 22 are electrically connected via through holes 25. The image capturing element 7 and various circuit components are mounted in the pattern 24 of each of the rigid substrates 22.

One of the rigid parts 20a functions as the image capturing element holding substrate 6, and the other rigid part 20b functions as the circuit component holding substrate 9. The flexible part 20c is bent into a U shape. Then, the rigid parts 20a and 20b are arranged in parallel to each other in the respective holders 2 and 5 while the flexible part 20c is placed such that the curved outer surface of the flexible part 20c extends along the inner surfaces of the holders 2 and 5.

In the drawings, reference numeral 15 indicates O rings to maintain watertightness between the outer case body 1a and the lens unit 3. Reference numeral 16 indicates a gasket to maintain watertightness between the outer case body 1a and the outer case bottom cover 1b. Reference numeral 17 indicates an elastic bushing to maintain the watertightness of a cable through portion of the outer case bottom cover 1b.

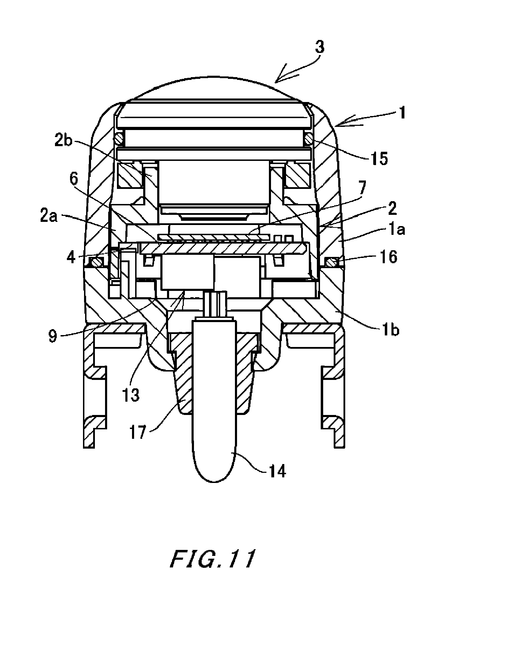

The camera module of the aforementioned structure is a multifunctional camera module with a plurality of substrates 6 and 9 arranged in parallel as described above. If this camera module is applied as a single-function camera module that only has an image capturing function, the substrate holder 5 may be omitted. Instead, as shown in Fig. 11, only the optical system holder 2 may be used to hold the image capturing element holding substrate 6, the cable connector 13 may be mounted on the back side of the substrate 6, and the cable 14 pulled out to the outside may be connected to the cable connector 13. The outer case 1 described above may also be used. In this case, the height of the outer case body 1a is reduced by the thickness of the substrate holder 5 that is not used.

The camera module of the aforementioned example houses two substrates arranged in parallel. Although not shown in the drawings, if the number of substrates to be used is increased by one or two or more, the substrate holder 5 may be prepared in number corresponding to the number of substrates to be added. Adjacent substrate holders 5 may be coupled through the aforementioned coupling structure employed for coupling between the optical system holder 2 and the substrate holder 5, and the circuit substrate 9 may be held in each substrate holder 5.

If a rigid flex substrate is used in this case, the rigid flex substrate may include three rigid parts, and two flexible parts connecting adjacent ones of the rigid parts. If the number of substrates to be used is increased, the rigid flex substrate may include rigid parts corresponding in number to the substrates to be used, and flexible parts connecting adjacent ones of the rigid parts.

If the camera module of the aforementioned structure is a multifunctional camera module using a plurality of substrates 6 and 9 as described above, the substrate holder 5 is coupled to the optical system holder 2, and the substrates 6 and 9 are supported in the corresponding holders. Accordingly, the circuit substrate 9 can be added only by coupling the substrate holder 5 to the optical system holder 2. This means that the multifunctional camera module and a camera module that uses only a single image capturing element holding substrate 6 can utilize parts common to each other, resulting in reduction in manufacturing cost.

The aforementioned camera module uses the rigid flex substrate 20 including the two rigid parts 20a and 20b, and the flexible part 20c connecting the rigid parts 20a and 20b. One of the rigid parts 20a serves as the image capturing element holding substrate 6, and the other rigid part 20b serves as the circuit component holding substrate 9. Further, the flexible part 20c is bent into a U shape, and the two rigid parts arranged in parallel are fixed in the holders 2 and 5. This eliminates the need for a connector for connecting the substrates 6 and 9 to reduce the size of the substrates while reducing a space between the substrates, thereby contributing to the size reduction of the camera module compared to the conventional camera module.

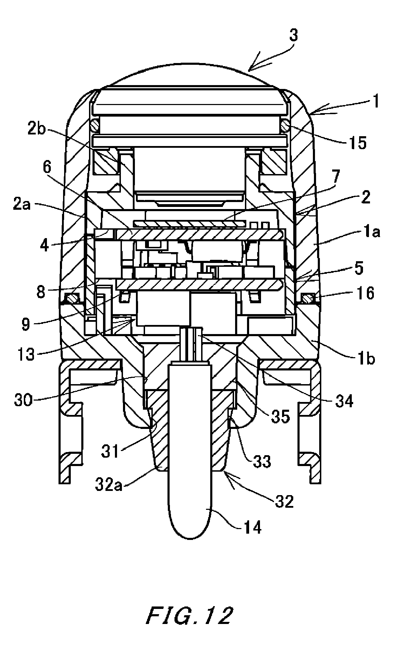

The aforementioned vehicle-mounted camera module may also be composed in the following way shown in Fig. 12. While the optical system holder 2 holds the lens unit 3 and the image capturing element holding substrate 6 therein, the substrate holder 5 holding the circuit component holding substrate 9 is coupled to the optical system holder 2. Then, the optical system holder 2 and the substrate holder 5 in this state are inserted into the outer case body 1a. Then, the outer case bottom cover 1b is fitted to the outer case body 1a while the cable 14 connected through the cable connector 13 penetrates through the bottom surface of the outer case bottom cover 1b, thereby providing watertightness.

A recessed portion 30 to be filled with a potting material is formed on the bottom surface of the outer case bottom cover 1b. A cable through hole 31 is opened in the bottom surface of the recessed portion 30 to be filled with a potting material.

An elastic bushing 32 in a compressed state is fitted into the cable through hole 31, and the cable 14 is inserted through the center of the elastic bushing 32. The cable 14 is inserted through the center of the elastic bushing 32 while being fastened elastically by the elastic bushing 32, so that liquid-tightness between the elastic bushing 32 and the cable 14 is maintained.

The elastic bushing 32 has an outer circumference in the form of a tapered tube. The cable 14 is inserted through a through hole at the center of the elastic bushing 32 such that the cable 14 is liquid-tightly connected to the elastic bushing 32. Further, an annular slot 33 to elastically receive the inner peripheral edge of the cable through hole 31 is formed in the outer circumference of a tip end portion of the elastic bushing 32 to maintain liquid-tightness. A tapered tip end portion 32a projects outside through the bottom surface of the outer case bottom cover 1b.

Leads 34 constituting the cable 14 are pulled out into the recessed portion 30 through an end portion of the cable 14 inside the case. A potting material 35 is filled into the recessed portion 30 to be filled with a potting material such that the leads 34 are buried by the potting material 35. The filling of the potting material 35 completely seals part of the outer case bottom cover 1b through which the cable 14 is pulled out.

Tip ends of the leads 34 are guided into the outer case bottom cover 1b, and are then connected to the cable connector 13.

The bushing 32 that receives the cable 14 inserted through the through hole formed at the center of the bushing 32 is fitted into the cable through hole 31 to temporarily close the cable through hole 31, and the cable 14 is temporarily fixed to the outer case bottom cover 1b. In this state, the potting material 35 is poured into the recessed portion 30 to be filled with a potting material.

At this time, the cable through hole 31 is hermetically closed temporarily by the elastic bushing 32 and the cable 14. Accordingly, the poured potting material 35 will not flow down even if it has a low viscosity. Also, the cable 14 is temporarily fixed to the outer case bottom cover 1b through the elastic bushing 32. Accordingly, the cable 14 will not be pulled out easily even before the potting material 35 is solidified, so that a next process can be conducted before the filled potting material 35 is solidified well.

### EXPLANATION OF REFERENCE NUMERALS

- 1: outer case
- 1a: outer case body
- 1b: outer case bottom cover
- 2: optical system holder
- 2a: substrate supporting part
- 2b: lens unit fixing part
- 3: lens unit
- 4: substrate fixing shoulder
- 5: substrate holder
- 6: image capturing element holding substrate
- 7: image capturing element
- 8: substrate fixing shoulder
- 9: circuit component holding substrate
- 10: engaging strip
- 10a: check claw
- 11: insertion slot
- 11a: engaging shoulder
- 12: window hole
- 13: cable connector
- 14: cable
- 15: O ring
- 16: gasket
- 17: elastic bushing
- 20: rigid flex substrate
- 20a, 20b: rigid part
- 20c: flexible part
- 21: FPC
- 22: rigid substrate
- 23: pattern
- 24: pattern
- 25: through hole
- 30: recessed portion to be filled with a potting material
- 31: cable through hole
- 32: elastic bushing
- 33: annular slot
- 34: lead
- 35: potting material

## Claims

1. A vehicle-mounted camera module comprising an optical system holder composed of a substrate supporting part in the form of a square box with a down-facing opening, and a cylindrical lens unit fixing part provided integrally with the substrate supporting part and formed at a center of a top of the substrate supporting part, a lens unit being supported in the lens unit fixing part, an image capturing element holding substrate on which an image capturing element is mounted being fixed in the substrate supporting part, the vehicle-mounted camera module being **characterized in that** a substrate holder is coupled to an end portion of the substrate supporting part of the optical system holder, and a circuit component holding substrate is supported in the substrate holder.

2. The vehicle-mounted camera module according to claim 1, wherein the substrate holder includes a plurality of substrate holders, and each of the substrate holders has a coupling structure for coupling to an adjacent one of the substrate holders.

3. The vehicle-mounted camera module according to claim 1 or 2, wherein the substrate holder has an outer circumference the shape of which is the same as an outer circumference of the substrate supporting part of the optical system holder, and the substrate supporting part of the optical system holder is elongated by coupling the substrate holder to the optical system holder.

4. The vehicle-mounted camera module according to any one of claims 1 to 3, wherein the holders each are provided with a substrate fixing shoulder formed integrally on an inner circumference of the holder, and the substrates are brought into abutting contact with the corresponding shoulders to place the substrates at their proper positions.

5. The vehicle-mounted camera module according to any one of claims 1 to 4, wherein the image capturing element holding substrate and the circuit component holding substrate are composed of rigid parts that constitute a rigid flex substrate including at least two rigid parts and a flexible part connecting the rigid parts, and the rigid flex substrate is fixed in the holder while the flexible part thereof is bent into a U shape and the rigid parts are arranged in parallel with each other.

6. The vehicle-mounted camera module according to any one of claims 1 to 5, wherein the substrate holder is coupled to the optical system holder with the lens unit attached to the substrate supporting part, and the optical system holder and the substrate holder in this state are housed in an outer case while water tightness is maintained.

7. The vehicle-mounted camera module according to claim 6, wherein the outer case is provided with a cable through hole formed at a bottom of the outer case through which a cable is pulled out of the outer case; the outer case is provided with a recessed portion to be filled with a potting material and which has a bottom surface in which an opening of the cable through hole is defined; an elastic bushing made of a rubbery elastic material and through which the cable is inserted while being liquid-tightly connected to the elastic bushing is fitted into the cable through hole; and a potting material is filled into the recessed portion to be filled with a potting material while the cable through hole is hermetically closed by the elastic bushing and the cable.

8. The vehicle-mounted camera module according to claim 7, wherein the elastic bushing has an outer circumference in the form of a tapered tube, an annular slot to tightly receive an inner peripheral edge of the cable through hole is formed in an outer circumference of a tip end portion of the elastic bushing, and a tapered tip end portion of the elastic bushing projects outside through the bottom surface of the outer case.
